# EUROPEAN PATENT SPECIFICATION

(11) **EP 2 491 185 B1**
(45) Date of publication and mention of the grant of the patent: **06.08.2014**
(21) Application number: 10777085.1
(22) Date of filing: 20.10.2010
(51) Int. Cl.: E02F 3/36

(54) **A COUPLER FOR COUPLING AN ATTACHMENT TO A WORK MACHINE**
KOPPLER ZUR KOPPLUNG EINES ANBAUTEILS AN EINE MASCHINE
DISPOSITIF D'ACCOUPLEMENT DESTINÉ À ACCOUPLER UN ÉLÉMENT AUXILIAIRE À UNE MACHINE

(30) Priority: 21.10.2009 GB 0918536; 24.03.2010 GB 201004918; 29.07.2010 GB 201012697
(43) Date of publication of application: 29.08.2012
(73) Proprietor: Whites Material Handling Ltd, Bristol BS4 5QW (GB)
(72) Inventor: GARLAND, Christopher Craig, Bristol BS4 5BP (GB); WAGSTAFF, John Reginald, Wiltshire SN15 3FD (GB); WHITE, Peter Henry, Bristol BS4 3HX (GB)
(74) Representative: Newstead, Michael John
(86) International application number: PCT/GB2010/051764
(87) International publication number: WO 2011/048413

(56) References cited:
- WO-A2-2008/029112
- WO-A2-2008/031590
- US-B1- 6 379 075

## Description

This invention relates to a coupler for coupling an attachment (such as a bucket) to a machine (such as a hydraulic excavator).

Hydraulic excavators are machines which are fitted with a range of buckets to dig holes and trenches in the ground. They can also be fitted with hydraulic hammers, grabs or other attachments to carry out a wide range of jobs in the construction and demolition industry. Such buckets for example are originally designed to connect to an excavator by means of two pins. A front pin fits into the excavator's main digging arm, and a rear pin fits through the back of the bucket and on to an arm referred to as a tipping link. The tipping link is activated by a hydraulic cylinder which, as it extends and retracts, causes the bucket to rotate around the digging arm. This action allows the bucket to dig, fill, retain and discharge its load.

Buckets and other attachments need to be changed on a regular basis. This used to be a long process but, in recent years, quick couplers have been invented and are now in common use. There are many different types and variants of quick couplers and as prior art there may be mentioned EP-A-1 318 242 and WO 2008/051095.

Following several fatal accidents, the British Health and Safety Executive, the British Standards Institution and the International Organization for Standardization have been concerned with the safety aspects of quick couplers. The requirements now in force state as follows:
a primary engagement system to attach and retain the bucket or other attachment;
a secondary locking device to prevent the bucket or other attachment from detaching from the coupler in the event of loss of primary engagement force; and
the secondary locking device must be of sufficient strength to withstand the forces that can be exerted on it by the actuating system under full power or by the normal working forces if the primary engagement force fails.

WO-A- 2008031590 discloses a coupler having the pre-characterising features of claim 1.

According to this invention, there is provided a coupler for coupling an accessory to an arm of a machine, the coupler comprising:
a structure having first and second jaws;
first retention means, for locking a first pin of an accessory in said first jaw;
second retention means, for locking a second pin of the accessory in said second jaw;
actuating means for moving said first retention means between a first position, in which it locks said first pin in said first jaw, and a second position, in which it does not lock said first pin in said first jaw such that, if said first retention means is in said first position, said second retention means locks said second pin in said second jaw and, if said first retention means is in said second position, said second retention means does not lock said second pin in said second jaw; and characterised by
restraining means for restraining movement of said first retention means from said first to said second position in the event of a failure of said actuating means, wherein said first retention means is carried by a slide which is movable by said actuating means,
said slide maintaining said second retention means in a position to lock said second pin in said second jaw if said first retention means is in said first position.

Said actuating means could comprise a hydraulic cylinder and piston arrangement.

Said restraining means could comprise spring means, the actuating means acting against the action of said spring means to move said first retention means from said first position to said second position. Said spring means could have one end attached to said slide and an opposite end fast with said structure.

In a preferred example, if said first retention means is in said second position, the coupler could be such that said slide does not maintain said second retention means in a position to lock said second pin in said second jaw. For example, said slide could have a slot into which said second retention means can move if said first retention means is in said second position.

Said second retention means could comprise a pivoted member which is provided with spring urging means for urging said member away from said second pin if said first retention member is in said second position. In this case, said spring urging means could comprise coil spring means around a pivot axis of said pivoted member.

In a preferred example, said first retention means comprises a hook member.

Preferably, said second pin enters said second jaw in a first direction, substantially parallel to the direction in which said first retention means moves from said first to said second position, said first pin entering said first jaw in a second direction which is substantially perpendicular to said first direction.

Preferably, the coupler includes a locking arrangement for preventing said actuating means moving said first retention means to said second position unless a longitudinal axis of the coupler is disposed in a direction for that to occur.

Said direction may be a vertical direction or up to a given angle either side of the vertical in use of the coupler. In this case, one of said jaws could face in a direction parallel to said longitudinal axis, the locking arrangement preventing said actuating means moving said first retention means to said second position unless said one of the jaws faces upwards or faces upwards at said given angle either side of the vertical in use of the coupler.

Said locking arrangement could comprise a member carrying first and second movable locking devices at least one of which is in a position to prevent said actuating means moving said first retention means to said second position unless said longitudinal axis is disposed in a direction for that to occur. In this case said locking devices could act on said first retention means. For example, said first retention means could be provided with first and second chambers, at least one of said locking devices being in engagement with said first retention means via a respective one of said chambers for preventing said actuating means moving said first retention means to said second position unless said longitudinal axis is disposed in a direction for that to occur.

Said locking devices could be movable under gravity.

At least one of said locking devices could be movable in a bore of said member of the locking arrangement.

Said locking devices could be ball bearings.

A preferred example of the invention relies on the action and position of a slide which activates and holds in place a retention member. This retention member locks a front pin of an attachment, in particular an excavator bucket, in place at all times, and will only allow the front pin to exit the coupler when the slide is hydraulically moved forwards. At all times while the retention member is locking the front pin, a retention hook, which is attached to the slide, is also held in place to lock a rear pin of the attachment. This locking of both rear and front pins is normally achieved by pressure exerted by a hydraulic cylinder (primary engagement). However, if primary engagement power is lost, secondary locking comes into action. The secondary locking is the combined action of spring forces holding the slide, which in turn holds the retention member in the locked position. The unique features of the action of the slide, the position of the retention member and retention hook ensure that the bucket will not become detached by either pin in the event of primary engagement failure.

Another feature of the preferred example of the invention is to allow the bucket to rattle after primary engagement failure. This will alert the operator that there is a problem which needs to be addressed. Although the secondary locking will allow a bucket to rattle, it will not be able to become disengaged.

It will be appreciated that the invention can be applied to other forms of attachment than buckets - for example hydraulic hammers or grabs.

The invention will now be described with reference to the accompanying drawings, in which:
Fig. 1 shows an excavator bucket attached to a coupler according to a preferred example of the invention;
Fig. 2 is a perspective view of the coupler;
Fig. 3 is a cut-away perspective view of parts of the coupler;
Fig. 4 is an exploded view showing a first retention means and a slider of the coupler;
Fig. 5 shows a hydraulic cylinder of the coupler;
Figs. 6a - 6c are views of urging spring means used in the coupler;
Fig. 7 is a detailed sectional view of part of the coupler;
Figs.8 - 10 are vertical cut-away views of the coupler in different stages of operation;
Figs. 11a and 11b are sections through a safety locking arrangement for a coupler according to the invention; and
Figs. 12a to 15a and 12b to 15b are sections through a coupler with the arrangement of Figs. 11 and 11b in various angular positions.

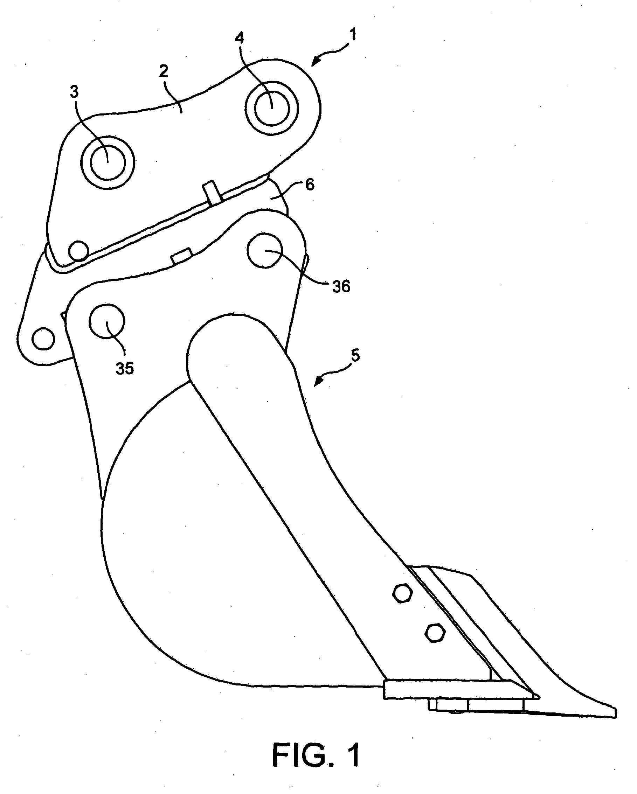

A coupler 1 comprises first and second steel side portions 2, each having first and second openings 3 and 4 provided with bushings. In use, pins through openings 3 and 4 are coupled to a tipping link and a main arm respectively of a hydraulic excavating machine, and a bucket 5 is attached to the coupler 1 (see Fig. 1). The side portions 2 are carried by a steel main support structure 6 and between them is a steel slide 7, the slide having a slot 8. The slide 7 is mounted for sliding on a pair of internal bars 9 (one on each side of structure 6) and is bolted to a retainer 10 which moves with the slide.

The structure 6 also carries via a flange 11, a hydraulic actuating cylinder 12 having a piston 13 and a piston rod 14. On opposite sides of cylinder 12 are oil input/output ports 15 and 16, one of which communicates with the right-hand side in the figures of the piston 13 and the other (via a duct 17) with the left-hand side in the figures of the piston 13. The end of rod 14 is received as an annular portion 18 between a pair of clevises 19 on the slide 7 and is fastened to them by a pin 20 extending through the clevises. Each of clevises 19 is integral with a retention hook 21 underneath the slide 7. The clevises 19 and hook member 21 are welded to the slide 7, although they may be cast as a single casting with the slide 7.

The rod 14 can act on the slide 7 against the action of first and second springs 22, one on each side of the cylinder 12. One end of each spring 22 is attached to a respective fixture 23 carried by the structure 6, the other end of each spring 22 being attached to an upstanding member 24 on the slide 7. The retention hook 21 acts as part of a primary engagement system.

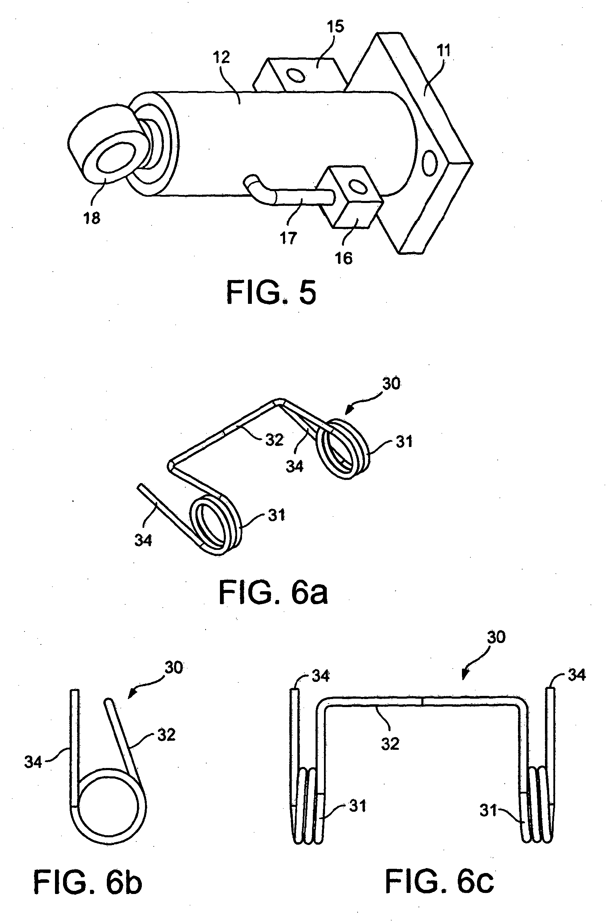

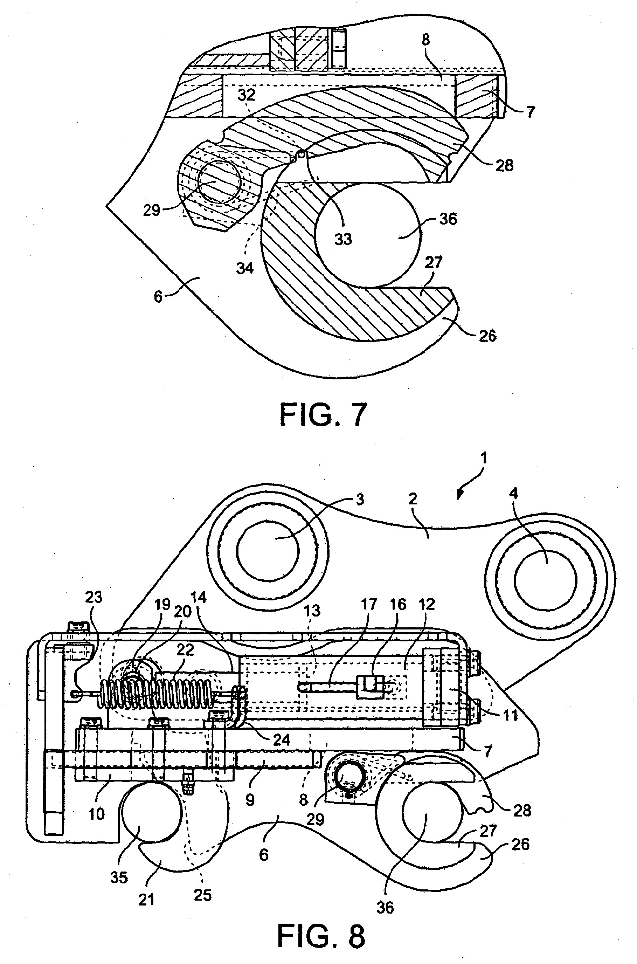

The underside of structure 6 defines, on each side, a rear jaw 25 and a front jaw 26. Each of front jaws 26 is lined with a steel lining which is welded to the jaws 26 and extends between the bottoms of the jaws 26 to provide a lining arrangement 27. Between the front jaws 26 is a retention clamp member 28. The member 28 is attached to a pivot shaft 29 around which there is coil spring means 30 (see Figs. 6a - 6c) acting to urge member 28 in an upwards direction in the figures. More particularly, spring means 30 comprises a pair of coil spring sections 31 which are joined by a branch section 32 received in a groove 33 in the underside of member 28, each of sections 31 terminating in an end prong 34 each of which bears against the inner sides of lining arrangement 27 (see Fig. 7).

In Figs. 8-10, there are shown rear and front pins 35 and 36 of an excavator bucket, pin 35 being received in rear jaws 25 and pin 36 being received in front jaws 26.

The operation of the coupler will now be described.

Fig.8 shows the coupler 1 in the fully locked position. The coupler retains the bucket by locking both rear and front pins 35 and 36 within the coupler if the primary engagement system fails. This is achieved by the unique action of the slide 7, the positioning of the retention clamp member 28 to lock the front pin 36, and the retention hook 21 for locking rear pin 35 in place.

As can be seen from Fig. 8, the retention hook 21 is holding rear pin 35, which in turn pulls the front pin 36 into front jaws 26. In this position, the slide 7 is now holding the retention clamp member 28 in the locked position against the action of spring means 30 and both pins 35 and 36 are locked in jaws 25 and 26 respectively.

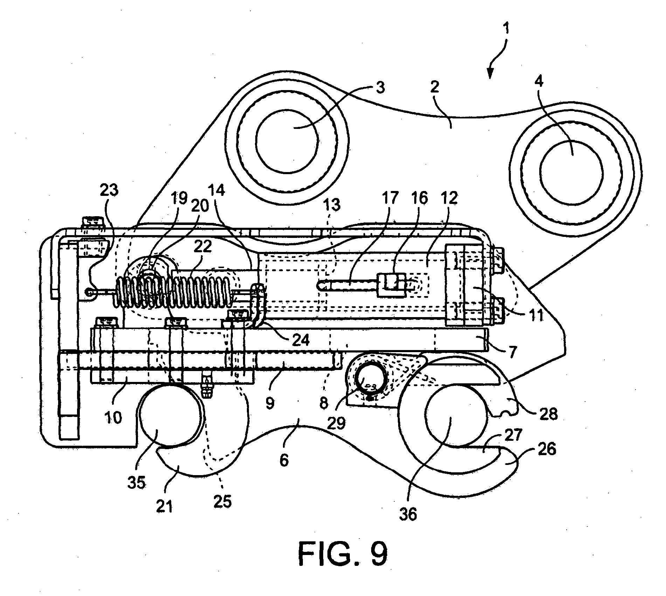

Fig. 9 shows the coupler 1 in the position in which the hydraulics of cylinder 12 have failed. Springs 22 will pull on slide 7, holding it in the locked position. The rear pin 35 is trapped by the retaining hook 21 and the front pin 36 is trapped by the retention clamp member 28. Thus, both pins 35 and 36 are safely retained within the body of the coupler 1.

Retention hook 21 can only move back as far as the main structure 6 will allow by virtue of its engagement with pin 35. An advantage of the coupler 1 is that, in this mode, the position of the hook 21 will allow the bucket to rattle to alert the operator that there is a problem in the event of primary engagement failure.

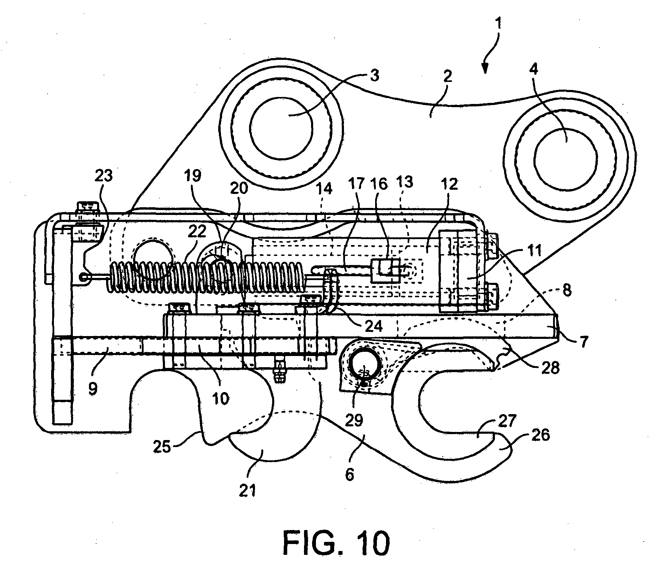

Fig. 10 shows the coupler 1 in the fully released position. This position can only be achieved under hydraulic power from the cylinder 12. The slide 7 has been moved backwards by cylinder 12, moving retention hook 21 with it. Rear pin 35 has now been released. The action of the slide 7 also enables retention clamp member 28 to be urged upwards by spring means 30 and secured into slot 8 in the slide 7. Retention clamp member 28 has now moved away from the front jaws 26 to release front pin 36.

It will be seen that front jaws 26 face outwards in a first direction, substantially parallel with the direction of movement of hook 21, whereas rear jaws 25 face downwards in the figures in a second direction, substantially perpendicular to the first direction. Accordingly, rear pin 35 enters in and out of rear jaws 25 in a direction substantially perpendicular to the direction in which front pin 36 enters in and out of front jaws 26.

There will now be described a preferred form of the above coupler which cannot be unlocked (i.e. put in a fully released position) accidentally or inadvertently if it is in an unsafe position for this to occur, i.e. if the front jaws 26, which face in a direction parallel to the longitudinal axis of the coupler, are facing directly downwards or facing downwards up to a given angle either side of the vertical.

A safe position for unlocking the coupler is with the front jaws 26 facing directly upwards or facing upwards at a given angle either side of the vertical (in which condition, the weight of a bucket or other attachment having a pin in jaws 26 will not cause the bucket or other attachment to fall off the machine if the coupler is in its fully released position). That is, the coupler cannot be put in a fully released position unless the jaws 26 face upwards and the longitudinal axis of the coupler extends in a vertical direction or a given angle either side of the vertical in use of the coupler.

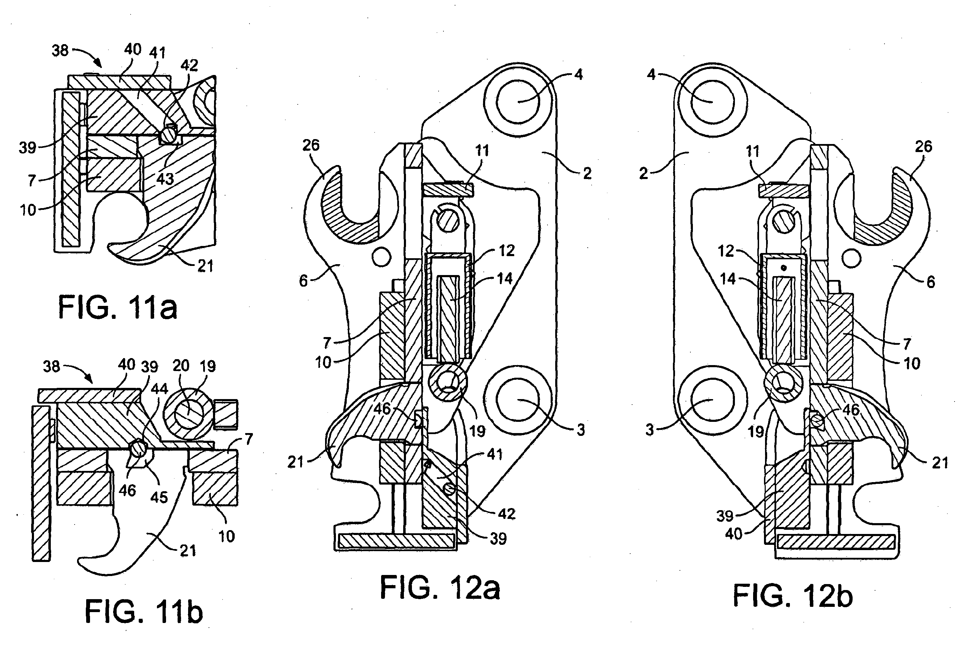

For the above purpose, a further locking arrangement 38 is provided comprising a steel member 39 bolted via a flange 40 to each side of support structure 6. Offset from the longitudinal axis of the coupler and on one side of the member 39, the latter includes an obliquely angled machined bore 41 to receive a first steel ball bearing 42 - see Fig. 11a. The bore 41 communicates with a first chamber 43 in the top of the hook 21 and aligned with the bore 41. Offset from the longitudinal axis of the coupler and on the opposite side of the member 39 from bore 41, the underside of the member 39 is formed with a chamber 44 aligned with a second chamber 45 in the top of hook 21 - see Fig. 11b. There is a second steel ball bearing 46, which can be received in chamber 45.

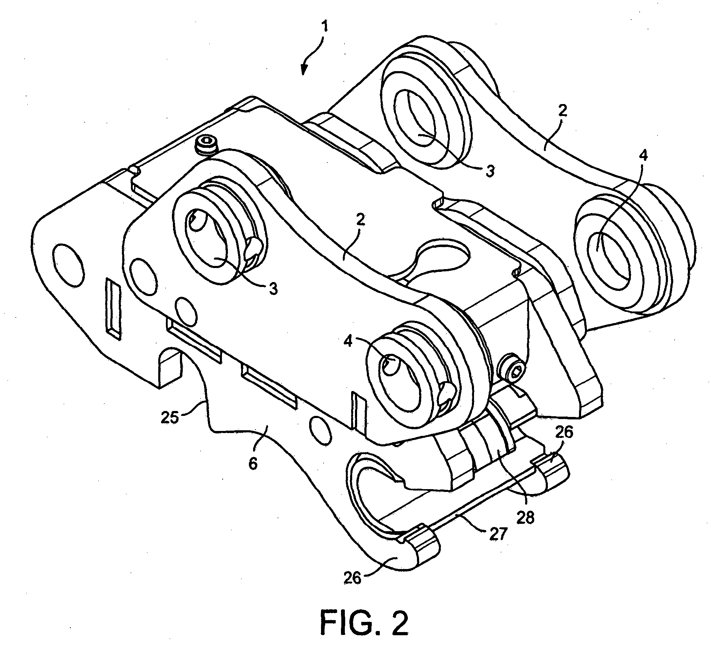

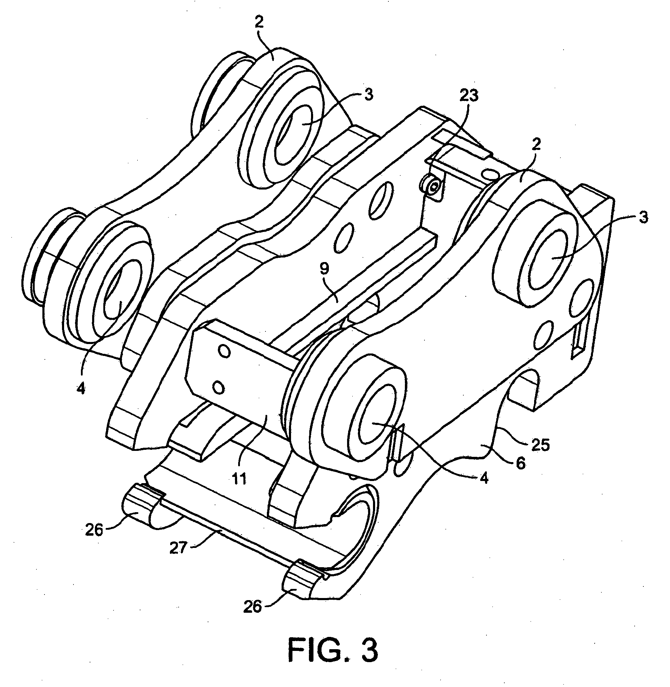

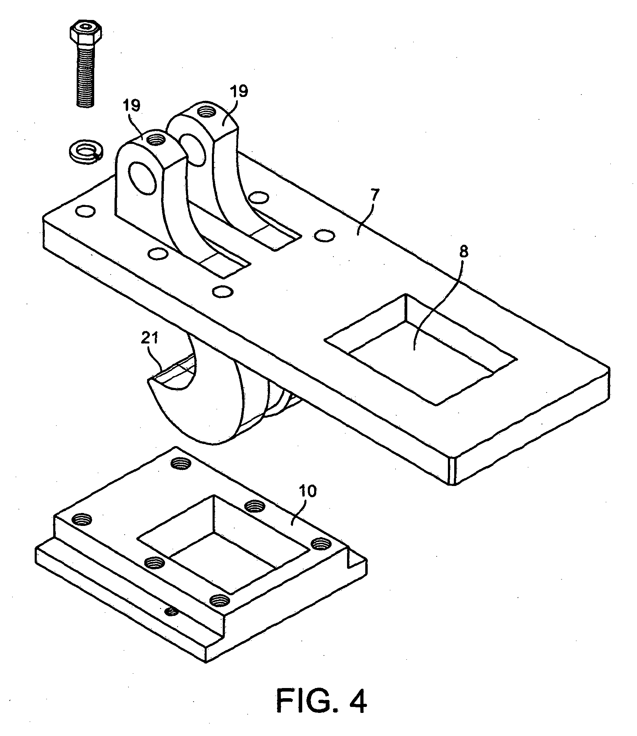

The operation of the further locking arrangement will now be described with reference to Figs. 12a to 15a (which show sections through the coupler through the bore 41 in various positions) and Figs. 12b to 15b (which show sections through the coupler through the chamber 45 in corresponding positions). The coupler comprises the coupler of Figs. 1 to 10 (except that the cylinder 12 is pivotally mounted to flange 11 at the end remote from clevises 19), certain items having been omitted from Figs. 12a-15a and 12b to 15b for clarity.

In Figs. 12a and 12b, the longitudinal axis of the coupler is vertical, the jaws 26 facing directly upwards. The ball bearing 46 has moved under gravity into chamber 45 and the ball bearing 42 has moved under gravity to the top of bore 41 in the figures, so that the coupler can be put in its fully released position as shown.

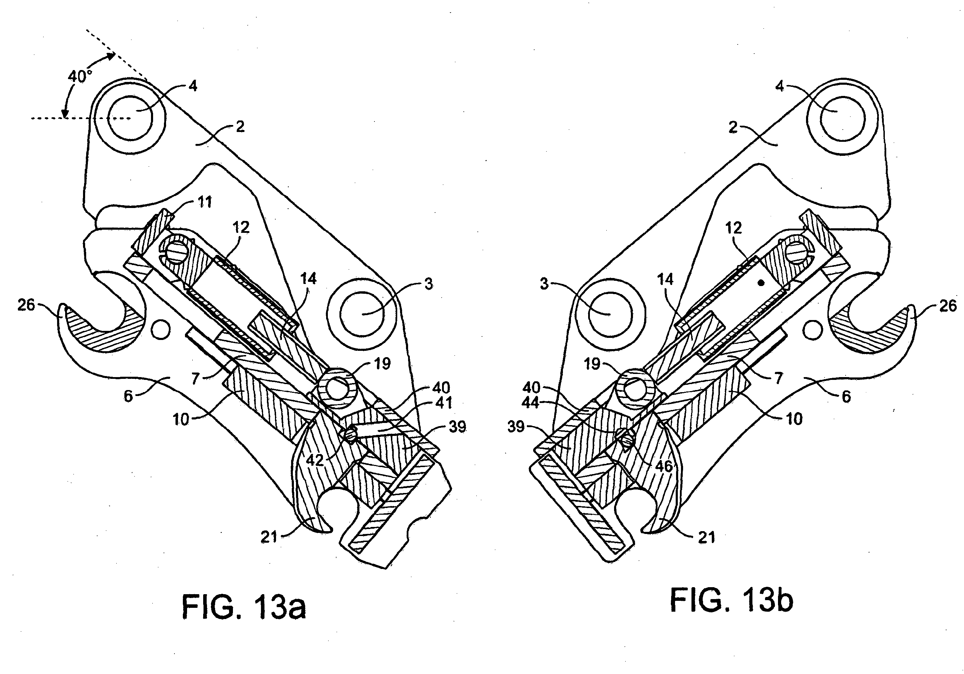

In Figs. 13a and 13b, the coupler has been rotated through 60° from the vertical, i.e. 40° to the ground, at which point the ball bearing 46 is still in chamber 45 but the ball bearing 42 has moved under gravity so as to enter chamber 43, to put the coupler into a locked condition and prevent the coupler being put into the fully released position by engaging hook 21 with member 39 via ball bearing 42.

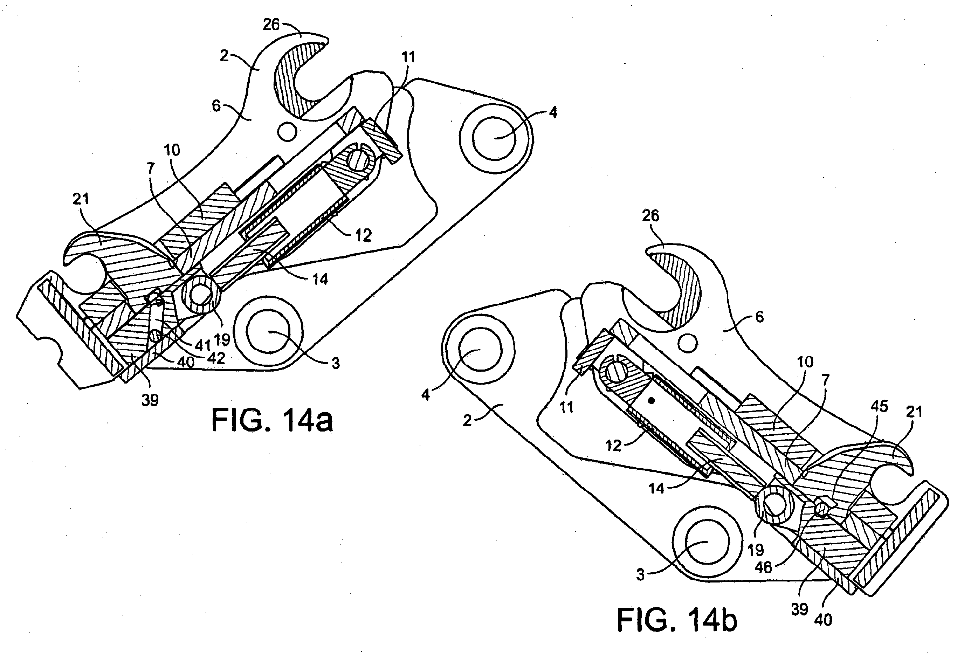

In Figs. 14a and 14b, the coupler has been rotated through 60° from the vertical in an opposite direction to Figs. 13a and 13b, at which point the ball bearing 42 has moved under gravity to the top of bore 41 but ball bearing 46 has moved under gravity to enter chamber 44, to put the coupler into a locked condition and prevent the coupler being put into the fully released position by engaging hook 21 with member 39 via ball bearing 46.

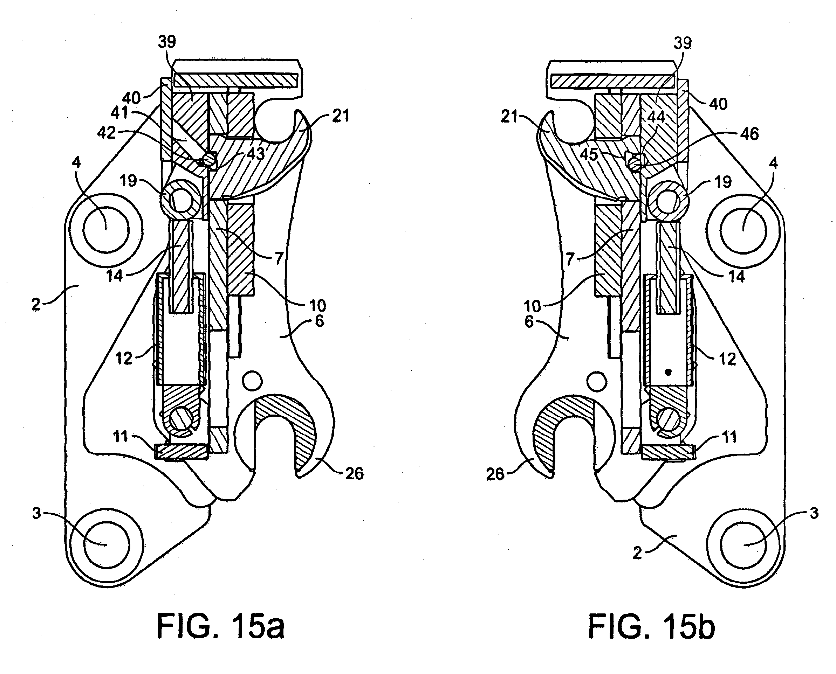

In Figs. 15a and 15b, the coupler has been rotated so that the jaws 26 face directly downwards, the ball bearing 46 now being in chamber 45 but the ball bearing 42 having moved under gravity to enter chamber 43, to put the coupler in a locked condition and prevent the coupler being put into the fully released position by engaging hook 21 with member 39 via ball bearing 42.

Thus, the coupler can only be put into the fully released position if the jaws 26 face directly upwards or face upwards in a direction up to a given angle of 60°, in the example, either side of the vertical. Otherwise, the coupler is in a locked condition by virtue of hook 21 being engaged with member 39 via one of ball bearings 42 and 46.

## Claims

1. A coupler (1) for coupling an accessory (5) to an arm of a machine, the coupler comprising:
a structure (6) having first and second jaws (25, 26);
first retention means (21), for locking a first pin (35) of an accessory in said first jaw (25);
second retention means (28), for locking a second pin (36) of the accessory in said second jaw (26);
actuating means (12, 13, 14) for moving said first retention means between a first position, in which it locks said first pin in said first jaw, and a second position, in which it does not lock said first pin in said first jaw such that, if said first retention means is in said first position, said second retention means locks said second pin in said second jaw and, if said first retention means is in said second position, said second retention means does not lock said second pin in said second jaw; and **characterised by**
restraining means (22) for restraining movement of said first retention means from said first to said second position in the event of a failure of said actuating means, wherein said first retention means is carried by a slide (7) which is movable by said actuating means,
said slide maintaining said second retention means in a position to lock said second pin in said second jaw if said first retention means is in said first position.

2. A coupler (1) according to claim 1, wherein said actuating means comprises a hydraulic cylinder and piston arrangement (12, 13, 14).

3. A coupler (1) according to claim 1 or 2, wherein said restraining means comprises spring means (22), the actuating means (12, 13, 14) acting against the action of said spring means to move said first retention means (21) from said first position to said second position.

4. A coupler (1) according to claim 3, wherein said spring means (22) has one end attached to said slide (7) and an opposite end fast with said structure (6).

5. A coupler (1) according to any preceding claim, wherein, if said first retention means (21) is in said second position, said slide (7) does not maintain said second retention means (28) in a position to lock said second pin (36) in said second jaw (26).

6. A coupler (1) according to claim 5, wherein said slide (7) has a slot (8) into which said second retention means (28) can move if said first retention means (21) is in said second position.

7. A coupler (1) according to any preceding claim, wherein said second retention means comprises a pivoted member (28) which is provided with spring urging means (30) for urging said member away from said second pin (36) if said first retention means (21) is in said second position.

8. A coupler (1) according to claim 7, wherein said spring urging means (30) comprises coil spring means (31) around a pivot axis of said pivoted member (28).

9. A coupler (1) according to any preceding claim, wherein said first retention means comprises a hook member (21).

10. A coupler (1) according to any preceding claim, wherein said second pin (36) enters said second jaw (26) in a first direction, substantially parallel to the direction in which said first retention means (21) moves from said first to said second position, said first pin (35) entering said first jaw (25) in a second direction which is substantially perpendicular to said first direction.

11. A coupler (1) according to any preceding claim, including a locking arrangement (38) for preventing said actuating means (12, 13, 14) moving said first retention means (21) to said second position unless a longitudinal axis of the coupler is disposed in a direction for that to occur.

12. A coupler (1) according to claim 11, wherein said direction is a vertical direction or up to a given angle either side of the vertical in use of the coupler.

13. A coupler (1) according to claim 12, wherein one of said jaws (26) faces in a direction parallel to said longitudinal axis, the locking arrangement (38) preventing said actuating means (12, 13, 14) moving said first retention means (21) to said second position unless said one of the jaws faces upwards or faces upwards at said given angle either side of the vertical in use of the coupler.

14. A coupler (1) according to any of claims 11 to 13, wherein said locking arrangement (38) comprises a member (39) carrying first and second movable locking devices (42, 46) at least one of which is in a position to prevent said actuating means (12, 13, 14) moving said first retention means (21) to said second position unless said longitudinal axis is disposed in a direction for that to occur.

## Patentansprüche

1. Kupplung (1) zum Ankoppeln eines Zubehörteils (5) an einen Arm einer Maschine, wobei die Kupplung umfasst:
eine Struktur (6) mit ersten und zweiten Klauen (25, 26);
erste Haltemittel (21) zum Arretieren eines ersten Stifts (35) eines Zubehörteils in der ersten Klaue (25);
zweite Haltemittel (28) zum Arretieren eines zweiten Stifts (36) des Zubehörteils in der zweiten Klaue (26);
Betätigungsmittel (12, 13, 14) zum Bewegen des ersten Haltemittels zwischen einer ersten Position, in der es den ersten Stift in der ersten Klaue arretiert, und einer zweiten Position, in der es den ersten Stift nicht in der ersten Klaue arretiert, derart dass, wenn sich das erste Haltemittel in der ersten Position befindet, das zweite Haltemittel den zweiten Stift in der zweiten Klaue arretiert und, wenn sich das erste Haltemittel in der zweiten Position befindet, das zweite Haltemittel den zweiten Stift nicht in der zweiten Klaue arretiert; und
**gekennzeichnet durch**
Einschränkungsmittel (22) zum Einschränken der Bewegung des ersten Haltemittels von der ersten in die zweite Position im Fall eines Versagens des Betätigungsmittels, wobei das erste Haltemittel von einem Schlitten (7) getragen wird, der **durch** das Betätigungsmittel bewegbar ist,
wobei der Schlitten das zweite Haltemittel in einer Position hält, in der es den zweiten Stift in der zweiten Klaue arretiert, wenn sich das erste Haltemittel in der ersten Position befindet.

2. Kupplung (1) nach Anspruch 1, wobei das Betätigungsmittel eine hydraulische Zylinder- und Kolbenanordnung (12, 13, 14) umfasst.

3. Kupplung (1) nach Anspruch 1 oder 2, wobei das Einschränkungsmittel Federmittel (22) umfasst, wobei das Betätigungsmittel (12, 13, 14) der Wirkung des Federmittels entgegenwirkt, um das erste Haltemittel (21) von der ersten Position in die zweite Position zu bewegen.

4. Kupplung (1) nach Anspruch 3, wobei ein Ende des Federmittels (22) an dem Schlitten (7) angebracht ist und ein gegenüberliegendes Ende an der Struktur (6) befestigt ist.

5. Kupplung (1) nach einem vorangehenden Anspruch, wobei, wenn sich das erste Haltemittel (21) in der zweiten Position befindet, der Schlitten (7) das zweite Haltemittel (28) nicht in einer Position hält, in der es den zweiten Stift (36) in der zweiten Klaue (26) arretiert.

6. Kupplung (1) nach Anspruch 5, wobei der Schlitten (7) einen Schlitz (8) aufweist, in den sich das zweite Haltemittel (28) hineinbewegen kann, wenn sich das erste Haltemittel (21) in der zweiten Position befindet.

7. Kupplung (1) nach einem vorangehenden Anspruch, wobei das zweite Haltemittel ein gelenkig verbundenes Element (28) umfasst, das mit Federdrückmitteln (30) versehen ist, die das Element von dem zweiten Stift (36) wegdrücken, wenn sich das erste Haltemittel (21) in der zweiten Position befindet.

8. Kupplung (1) nach Anspruch 7, wobei das Federdrückmittel (30) Schraubenfedermittel (31) um eine Schwenkachse des gelenkig verbundenen Elements (28) umfasst.

9. Kupplung (1) nach einem vorangehenden Anspruch, wobei das erste Haltemittel ein Hakenelement (21) umfasst.

10. Kupplung (1) nach einem vorangehenden Anspruch, wobei der zweite Stift (36) in einer ersten Richtung in die zweite Klaue (26) eintritt, die im Wesentlichen parallel zu der Richtung ist, in der sich das erste Haltemittel (21) von der ersten in die zweite Position bewegt, wobei der erste Stift (35) in die erste Klaue (25) in einer zweiten Richtung eintritt, die im Wesentlichen senkrecht zu der ersten Richtung ist.

11. Kupplung (1) nach einem vorangehenden Anspruch, die eine Arretieranordnung (38) umfasst, die verhindert, dass das Betätigungsmittel (12, 13, 14) das erste Haltemittel (21) in die zweite Position bewegt, es sei denn, eine Längsachse der Kupplung ist für diesen Vorgang ausgerichtet.

12. Kupplung (1) nach Anspruch 11, wobei die Richtung eine vertikale Richtung ist oder, bei Verwendung der Kupplung, bis zu einem bestimmten Winkel seitlich von der Vertikalen abweicht.

13. Kupplung (1) nach Anspruch 12, wobei eine der Klauen (26) in eine zur Längsachse parallele Richtung weist, wobei die Arretieranordnung (38) verhindert, dass das Betätigungsmittel (12, 13, 14) das erste Haltemittel (21) in die zweite Position bewegt, es sei denn, die eine der Klauen weist nach oben oder, bei Verwendung der Kupplung, mit dem bestimmten Winkel seitlich von der Vertikalen abweichend nach oben.

14. Kupplung (1) nach einem der Ansprüche 11 bis 13, wobei die Arretieranordnung (38) ein Element (39) umfasst, das erste und zweite bewegliche Arretiervorrichtungen (42, 46) trägt, von denen sich wenigstens eine in einer Position befindet, in der sie verhindert, dass das Betätigungsmittel (12, 13, 14) das erste Haltemittel (21) in die zweite Position bewegt, es sei denn, die Längsachse ist für diesen Vorgang ausgerichtet.

## Revendications

1. Coupleur (1) destiné à coupler un accessoire (5) à un bras d'une machine, le coupleur comprenant :
une structure (6) comportant des première et seconde mâchoires (25, 26) ;
un premier moyen de retenue (21) destiné à bloquer une première goupille (35) d'un accessoire dans ladite première mâchoire (25) ;
un second moyen de retenue (28) destiné à bloquer une seconde goupille (36) de l'accessoire dans ladite seconde mâchoire (26) ;
des moyens d'actionnement (12, 13, 14) destinés à déplacer ledit premier moyen de retenue entre une première position, dans laquelle il bloque ladite première goupille dans ladite première mâchoire, et une seconde position, dans laquelle il ne bloque pas ladite première goupille dans ladite première mâchoire, de sorte que, si ledit premier moyen de retenue est dans ladite première position, ledit second moyen de retenue bloque ladite seconde goupille dans ladite seconde mâchoire et, si ledit premier moyen de retenue est dans ladite seconde position, ledit second moyen de retenue ne bloque pas ladite seconde goupille dans ladite seconde mâchoire ; et **caractérisé par**
un moyen de contrainte (22) destiné à contraindre le déplacement dudit premier moyen de retenue de ladite première à ladite seconde position dans le cas d'une panne desdits moyens d'actionnement, dans lequel
ledit premier moyen de retenue est porté par une coulisse (7) qui peut être déplacée par lesdits moyens d'actionnement,
ladite coulisse maintenant ledit second moyen de retenue dans une position afin de bloquer ladite seconde goupille dans ladite seconde mâchoire si ledit premier moyen de retenue est dans ladite première position.

2. Coupleur (1) selon la revendication 1, dans lequel lesdits moyens d'actionnement comprennent un agencement de cylindre et piston hydrauliques (12, 13, 14).

3. Coupleur (1) selon la revendication 1 ou 2, dans lequel ledit moyen de contrainte comprend un moyen de ressort (22), les moyens d'actionnement (12, 13, 14) agissant contre l'action dudit moyen de ressort pour déplacer ledit premier moyen de retenue (21) de ladite première position à ladite seconde position.

4. Coupleur (1) selon la revendication 3, dans lequel ledit moyen de ressort (22) a une extrémité fixée à ladite coulisse (7) et une extrémité opposée fixée à ladite structure (6).

5. Coupleur (1) selon l'une quelconque des revendications précédentes, dans lequel, si ledit premier moyen de retenue (21) est dans ladite seconde position, ladite coulisse (7) ne maintient pas ledit second moyen de retenue (28) dans une position pour bloquer ladite seconde goupille (36) dans ladite seconde mâchoire (26).

6. Coupleur (1) selon la revendication 5, dans lequel ladite coulisse (7) comporte une fente (8) dans laquelle ledit second moyen de retenue (28) peut se déplacer si ledit premier moyen de retenue (21) est dans ladite seconde position.

7. Coupleur (1) selon l'une quelconque des revendications précédentes, dans lequel ledit second moyen de retenue comprend un élément à pivot (28) qui est doté d'un moyen de poussée à ressort (30) destiné à pousser ledit élément pour l'éloigner de ladite seconde goupille (36) si ledit premier élément de retenue (21) est dans ladite seconde position.

8. Coupleur (1) selon la revendication 7, dans lequel ledit moyen de poussée à ressort (30) comprend un moyen de ressort hélicoïdal (31) autour d'un axe de pivot dudit élément à pivot (28).

9. Coupleur (1) selon l'une quelconque des revendications précédentes, dans lequel ledit premier moyen de retenue comprend un élément de crochet (21).

10. Coupleur (1) selon l'une quelconque des revendications précédentes, dans lequel ladite seconde goupille (36) entre dans ladite seconde mâchoire (26) dans une première direction, sensiblement parallèle à la direction dans laquelle ledit premier moyen de retenue (21) se déplace de ladite première à ladite seconde position, ladite première goupille (35) entrant dans ladite première mâchoire (25) dans une seconde direction qui est sensiblement perpendiculaire à ladite première direction.

11. Coupleur (1) selon l'une quelconque des revendications précédentes, comprenant un agencement de blocage (38) destiné à empêcher lesdits moyens d'actionnement (12, 13, 14) de déplacer ledit premier moyen de retenue (21) vers ladite seconde position à moins qu'un axe longitudinal du coupleur soit disposé dans une direction pour que cela se produise.

12. Coupleur (1) selon la revendication 11, dans lequel ladite direction est une direction verticale ou jusqu'à un angle donné d'un côté ou de l'autre de la verticale en utilisation du coupleur.

13. Coupleur (1) selon la revendication 12, dans lequel une desdites mâchoires (26) est dirigée dans une direction parallèle audit axe longitudinal, l'agencement de blocage (38) empêchant lesdits moyens d'actionnement (12, 13, 14) de déplacer ledit premier moyen de retenue (21) vers ladite seconde position à moins que ladite une des mâchoires ne soit dirigée vers le haut ou ne soit dirigée vers le haut au niveau dudit angle donné d'un côté ou de l'autre de la verticale en utilisation du coupleur.

14. Coupleur (1) selon l'une quelconque des revendications 11 à 13, dans lequel ledit agencement de blocage (38) comprend un élément (39) portant des premier et second dispositifs de blocage mobiles (42, 46) dont au moins l'un est dans une position destinée à empêcher lesdits moyens d'actionnement (12, 13, 14) de déplacer ledit premier moyen de retenue (21) vers ladite seconde position à moins que ledit axe longitudinal ne soit disposé dans une direction pour que cela se produise.
